(19) Europäisches Patentamt / European Patent Office / Office européen des brevets

(11) **EP 1 833 177 A1**

(12) **EUROPEAN PATENT APPLICATION**

(43) Date of publication:
**12.09.2007 Bulletin 2007/37**

(51) Int Cl.:
**H04B 7/216** (2006.01)  **H04B 1/707** (2006.01)

(21) Application number: **07111464.9**

(22) Date of filing: **01.03.2004**

(84) Designated Contracting States:
**AT BE BG CH CY CZ DE DK EE ES FI FR GB GR HU IE IT LI LU MC NL PL PT RO SE SI SK TR**

(30) Priority: **03.03.2003 US 452162**
**02.12.2003 US 725808**

(62) Document number(s) of the earlier application(s) in accordance with Art. 76 EPC:
**04716100.5 / 1 602 182**

(71) Applicant: **Interdigital Technology Corporation Wilmington, DE 19810 (US)**

(72) Inventors:
• **Timmerman, Chayil S.**
  **King of Prussia, PA 19406 (US)**
• **Supplee, Stephan Shane**
  **Coatesville, PA 19320 (US)**
• **Buchert, Ryan Samuel**
  **Phoenixville, PA 19460 (US)**
• **Becker, Peter Edward**
  **Coatesville, PA 19320 (US)**
• **Nasuti, Tonino**
  **Norristown, PA 19403 (US)**
• **DiFazio, Robert A.**
  **Greenlawn, NY 11740 (US)**
• **Haim, John W.**
  **Baldwin, NY 11510 (US)**

(74) Representative: **Ahrengart, Kenneth**
  **Awapatent AB**
  **P.O. Box 45086**
  **104 30 Stockholm (SE)**

Remarks:
This application was filed on 29 - 06 - 2007 as a divisional application to the application mentioned under INID code 62.

(54) **Optimizing multi-user detection**

(57) Multi-user detection (MUD) performance is optimized to eliminate redundant use of power during processing. An overbuilt A-matrix, i.e., a system response matrix, is provided. The overbuilt A-matrix uses all possible codes, e.g., all codes identified in a candidate code list (CCL) provided by blind code detection (BCD).

The overbuilt A-matrix is passed to the MUD which extracts only those rows or columns required for codes that have actually been received, thus eliminating the need to recompute whitening matched filter (WMF) outputs that do not correspond to the actually received code.

EP 1 833 177 A1

**Description**

FIELD OF INVENTION

This invention generally relates to wireless communications, and more particularly, to joint detection in such systems.

BACKGROUND

Joint detectors, such as multi-user detectors (MUD), reduce the effect of multiple access interference, and hence increase the system capacity. A MUD cancels intra-cell interference and the system capacity is determined by the efficiency of the MUD algorithm and the intercell interference. In addition to capacity improvement, MUD alleviates the near/far problem typical to direct sequence - code division multiple access (DS-CDMA) systems.

Conventional MUD algorithms extract all codes from a system response matrix (i.e., the A-matrix), rather than those codes that have actually been received. This is a substantial waste of computation power and it increases the system delay. To illustrate, the maximum number of transmitted codes in a time slot in the time division duplex (TDD) mode of Universal Mobile Telecommunications System (UMTS) wideband - code division multiple access (W-CDMA) is 16 codes. Therefore, the A-matrix may be constructed using 16 codes. However, suppose only 8 codes were transmitted. Since the MUD algorithm computational complexity is approximately proportional to the square of the number of codes used, the doubling of codes increases the MUD complexity by a factor of 4. Two general MUD implementations use a zero forcing (ZF) block linear equalizer (BLE) and a minimum mean square error (MMSE) solution. ZF BLE is modeled per Equation 1.

$$A^H \bar{r} = \left( A^H A \right) \bar{d} \qquad\qquad \text{Equation 1}$$

A is the system response matrix. $(\cdot)^H$ is the complex conjugate transpose operation. $\bar{r}$ is the received signal vector for a particular data field. $d$ is the soft symbol vector. By using matrix inversion, the soft symbol vector $d$ is determined per Equation 2.

$$\bar{d} = \left( A^H A \right)^{-1} A^H \bar{r} \qquad\qquad \text{Equation 2}$$

$(o)^{-1}$ is matrix inversion.

MMSE is modeled per Equation 3.

$$A^H \bar{r} = \left( A^H A + \sigma^2 I \right) \bar{d} \qquad\qquad \text{Equation 3}$$

σ is the noise variance and I is the identity matrix. By using matrix inversion, the soft symbol vector $d$ is determined per Equation 4.

$$\bar{d} = \left( A^H A + \sigma^2 I \right)^{-1} A^H \bar{r} \qquad\qquad \text{Equation 4}$$

The operation $A^H \bar{r}$ is typically called a whitening matched filter (WMF). Notice that it appears within the MUD equations above. A WMF alone is a means of estimating soft-symbols that is typically not as reliable as the MUD output, but has certain use as a lower quality estimate of the soft symbol vector.

MUD performance generally involves performing calculations which consume power that can sometimes be saved, thus providing an economical benefit. More particularly, calculations in support of blind code detection (BCD) and discontinuous transmission (DTX) involve processing that uses power and may require redundant circuitry or software.

Various techniques exist to reduce the complexity of a MUD implementation such as an approximate Cholesky decomposition or fast Fourier transform (FFT) processing. Even so, the MUD represents a large portion of receiver processing and also causes delay in the received signal path. Hence it is desirable to improve receiver/MUD efficiency by reducing the processing requirements and/or delay.

SUMMARY OF THE INVENTION

The invention provides a method and system for determining which codes have been received in a given time slot and eliminating redundant calculations when performing MUD, BCD and/or DTX related processing.

A method is implemented in a code division multiple access (CDMA) system or in a wireless transmit/receive unit (WTRU) that receives a plurality of data signals distinguished by codes. The A-matrix is constructed using a list of possible codes and channel responses associated with their codes, where the list of possible codes consists of either all possible codes based on the system design or a reduced list provided by another receiver algorithm, such as a candidate code list (CCL) provided by BCD. Based on the constructed matrix, soft symbol estimates are computed for the first N symbols of each of the possible codes. Soft symbol estimates may be based on WMF outputs, $A^H\bar{r}$. Based on the N soft symbol estimates, the identities of received codes are determined.

User data is ultimately extracted from the received signal. The extraction of data may be performed using a MUD, which uses the determined identities of the received codes. The N soft symbol estimates may be passed to the MUD, avoiding what would be the recomputation of the same WMF values for the first N symbols associated with the identified received codes.

Codes in the A-matrix identified as received are marked as valid. Codes in the A-matrix identified as not-received are marked as invalid. The invalid codes are not used by the MUD to extract user data.

The identities of the received codes may be determined by code energy measurements derived from the N soft symbol estimates. The code energy measurements and determination of identities of received codes may be performed by receiver processes such as blind code detection (BCD) and/or end-of-DTX detection.

BRIEF DESCRIPTION OF THE DRAWINGS

A more detailed understanding of the invention may be had from the following description of a preferred example, given by way of example and to be understood in conjunction with the accompanying drawing wherein:

Figure 1 is a block diagram of a wireless receiver system in which the present invention is implemented;

Figure 2 illustrates WMF results for N symbols using an overbuilt A-matrix;

Figure 3 shows the MUD WMF results; and

Figure 4 shows a process for determining valid and invalid codes.

DETAILED DESCRIPTION OF THE PREFERRED EMBODIMENT(S)

Although the preferred embodiments are described in conjunction with a preferred TDD/CDMA, or time division multiple access (TDMA)/CDMA communication system, some aspects are also applicable to CDMA systems in general. However, the invention in its broad form is envisaged to be applicable to other systems of transmission also, without limitation.

Hereafter, a wireless transmit/receive unit (WTRU) includes but is not limited to a user equipment, mobile station, fixed or mobile subscriber unit, pager, or any other type of device capable of operating in a wireless environment. When referred to hereafter, a base station includes but is not limited to a base station, Node-B, site controller, access point or other interfacing device in a wireless environment.

Although the preferred implementation of the present invention is at a WTRU, it can also be adapted for use at a base station.

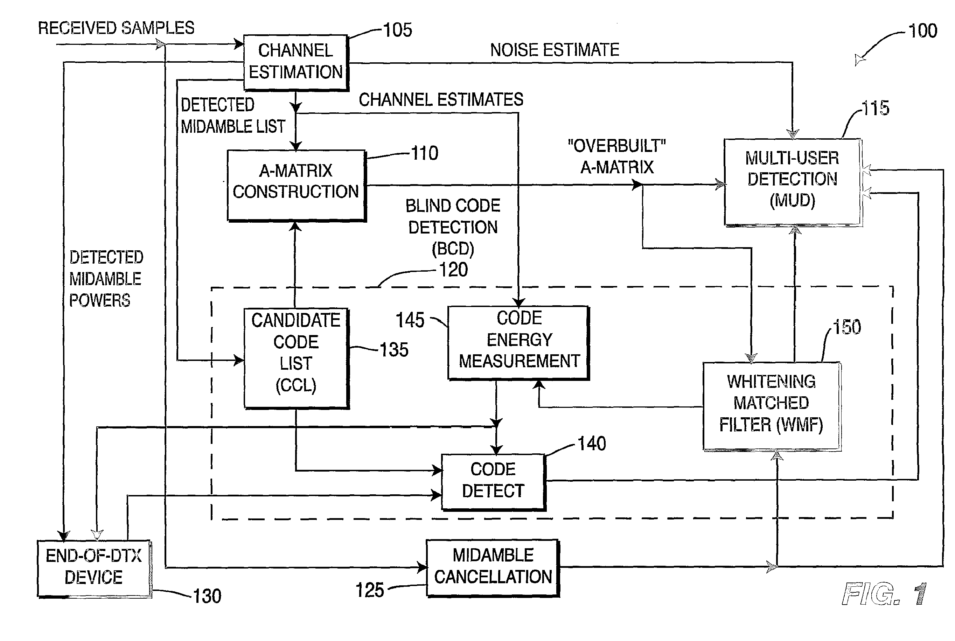

Figure 1 shows a preferred embodiment of a wireless receiver system 100. The wireless receiver system 100 includes a channel estimation device 105, an A-matrix construction device 110, a MUD 115, a BCD device 120, a midamble cancellation device 125 and an End-of-DTX device 130. The BCD device 120 includes candidate code list (CCL) device 135, a code detect device 140, a code energy measurement device 145 and a WMF 150. Although the preferred embodiments are described using a MUD 115, BCD device 120 and an End-of-DTX device 130, the invention can be applied to alternate receiver implementations using different receiver algorithms than MUDS, such as a Rake receiver, and with or without a BCD or End-of-DTX device. The wireless receiver system 100 may be incorporated into an integrated circuit (IC) or be configured in a circuit comprising a multitude of interconnecting components.

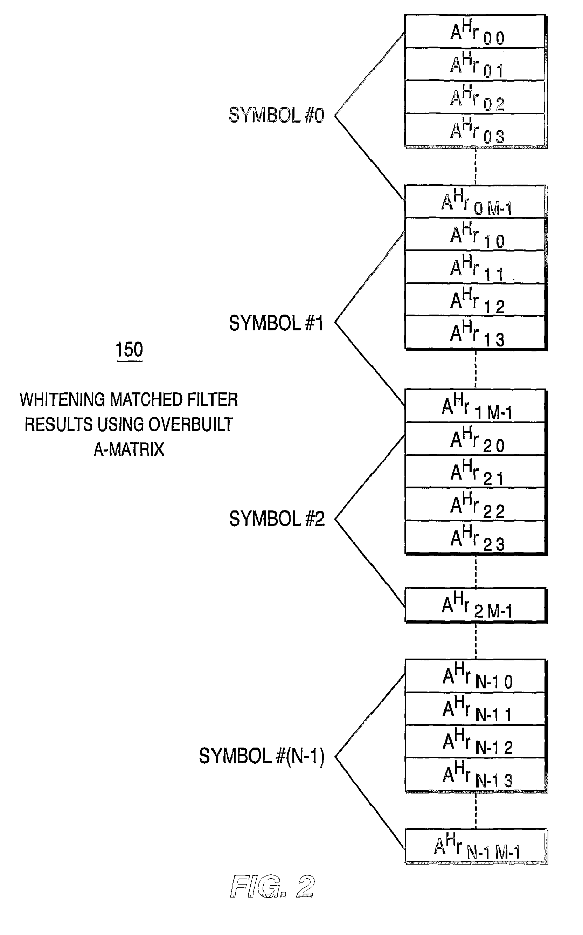

Figure 2 shows the WMF results 150 for N symbols based on the "overbuilt" A-matrix 110. The "overbuilt" A-matrix is constructed based on a list of M possible codes in a timeslot. A list of M possible codes, which is a subset of an a priori known list of codes, is provided by the CCL device 135 within the BCD device 120. In an implementation without BCD, the list of M possible codes can be provided by other algorithms or may be a priori known based on the system design. A possible implementation is described in U.S. patent application Serial No. 10/396,992, filed on September 15, 2003, which is incorporated herein by reference. In order to determine which codes are present, a BCD code energy measurement 145 and an algorithm executed by end-of-DTX device 130 are performed using N symbols of each possible code, where N is less than the total number of symbols per code in the timeslot. The code energy measurement is made using the output of a WMF operation performed with the "overbuilt" A-matrix on the N symbols of the received signal.

In the preferred embodiment for the TDD mode of UMTS W-CDMA, a data burst includes a midamble and two data fields, and channel estimates are calculated on the midamble. The channel estimates are convolved with the spreading code and scrambling code to generate the A-matrix, which is essentially a combined code/channel model that describes the system response. N soft symbol estimates are then generated via a WMF.

Figure 2 shows a total of M * N soft symbols that are outputted by the WMF 150, where for each of N symbols M soft values correspond to M codes that may or may not have been received. The notation $A^H r_{i\,j}$ ($0 \leq i \leq N-1$, $0 \leq j \leq M-1$) is used to indicate the element of the $A^H r$ vector corresponding to soft symbol i computed using code j. For example, $A^H r_{02}$ indicates the soft value computed for symbol 0 using code 2.

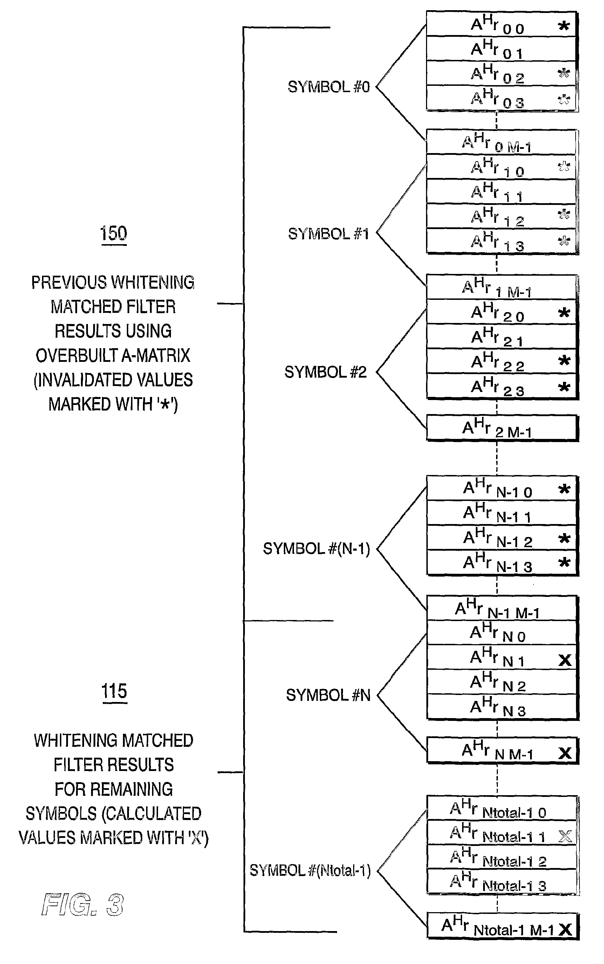

After the BCD device 120 and the End-of-DTX device 130 are complete, codes that are determined as not-received, i.e., not-present, are invalidated using various addressing techniques, whereby a set of vectors indicate which columns/rows of the A-matrix are valid and which are not. The results of the WMF 150 can then be validated or invalidated based on which code the symbol values are associated with as shown in Figure 3. For example, if it is determined that code 1 is present, a bit associated with code 1 in the vector set is filled with a "1". This bit indicates that the first column of the A-matrix is valid, and the column is considered during processing. The WMF results 150 that were calculated for code 1 are then considered to be valid and will be used in the MUD calculations 115. Alternatively, if it is determined that code 1 is not present, the bit is filled with a "0" indicating that the particular column should be ignored for the remainder of the process and the WMF results for code 1 will not be used in the MUD calculations. Before executing the MUD algorithm, a list is generated whereby a checkmark, X, 1/0 or other indicator may be used to mark code validity. Vector results indicating the validity of the M codes are sent from the BCD 120 to the MUD 115. The MUD 115 processes symbols in the timeslot for only the codes designated as valid, thus saving calculations, power, and reducing processing time (latency).

Because the WMF 150 was already performed for N symbols, the WMF portion of the MUD algorithm 115 need only perform WMF for the remaining ($N_{total}$- N) symbols, where $N_{total}$ is the total number of symbols in the data burst. The MUD performs these WMF calculations based on the rows or columns of the overbuilt A-matrix that were found to be valid as shown in Figure 3. This further saves calculations and power, and further reduces processing time (latency).

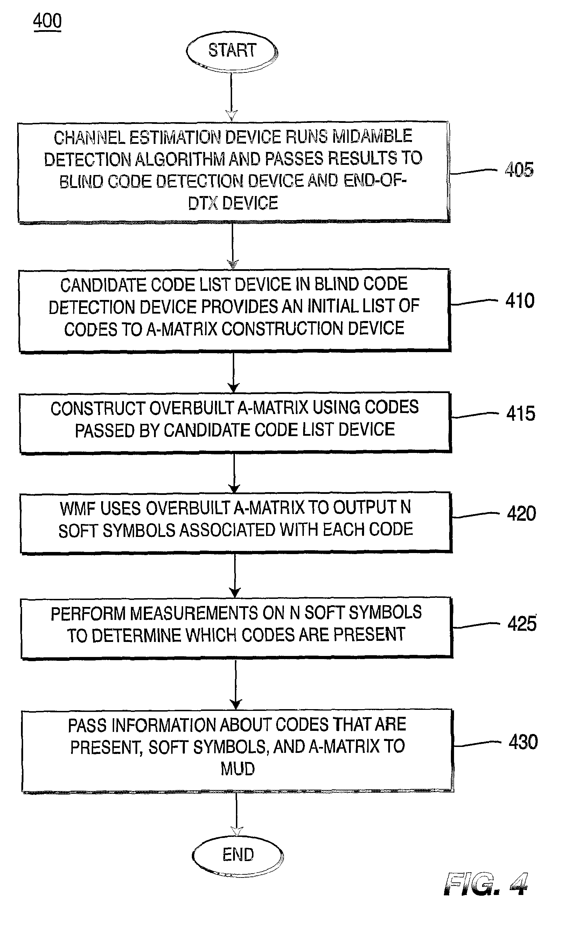

Referring to Figure 4, the following exemplary steps of a process 400 may be implemented in the performance of the preferred embodiment for the TDD mode of UMTS W-CDMA, although these steps can be applied to other wireless systems.

(1) The channel estimation device 105 runs a midamble detection algorithm which analyzes the midamble field of the received burst to determine the identities of the midamble shifts which are present, estimate the communication channel characteristic, and estimate the midamble powers. The results are passed to the BCD device 120 and the End-of-DTX device 130 (step 405).

(2) The CCL device 135 in BCD device 120 analyzes the results of the midamble detection algorithm implemented by the channel estimation device 105 and removes certain codes from a master list. The CCL device 135 then passes the reduced list of M codes to the A-matrix construction device 110 (step 410).

(3) The overbuilt A-matrix is constructed by the A-matrix construction device 110 once per timeslot using the reduced list of M codes (step 415).

(4) The WMF 150 uses the overbuilt A-matrix to provide soft symbol estimates for the N symbols of the M codes, where $N \leq N_{total}$. N, the number of symbols used in code energy measurement 145, is the larger of that required by the code detect device 140 and the End-of-DTX device 130. Soft symbols are outputted from the WMF 150 associated with each code (step 420).

(5) Measurements are performed on the N soft symbols to determine which codes are present (step 425). The measurements and code presence decisions may be based on energy estimates computed from symbols corresponding to each code (code energy measurements) and thresholds based on code power or noise power estimates.

(6) The N soft symbol estimates are passed to the MUD 115. Codes that are not declared present are invalidated, and codes declared present are validated. The information about codes that have be declared present or not, the N soft symbols, and the A-matrix 110 are passed to the MUD 115 (step 430). The MUD 115 uses only those symbols corresponding to the codes that have been declared present, hence eliminating the need to recompute the WMF 150 outputs; N multiplied by the number of codes declared present.

Initially, to find out which codes are valid and invalid, only the $N \leq N_{total}$ symbols for $A^H r$ are processed. Once that is complete, one possible option is to rebuild the A-matrix such that only codes that have been received are incorporated therein, and the $A^H r$ is recalculated for all of the symbols. This process is inefficient and uses considerable resources. In accordance with the preferred embodiment, although other alternatives may be used, a vector indicating which rows or columns are present in the A-matrix is established. Because the $A^H r$ outputs for the symbols corresponding to the valid codes have already been computed, they are used, i.e., not recomputed, and only $N_{total}$- N additional symbols are computed corresponding to those codes that were declared valid.

The foregoing is an example of how the MUD 115 processing can be optimized using the invention, to obviate needless use of power, reduce hardware requirements, reduce processing latency, and to avoid needless circuitry or software, as applicable. It is to be noted that the inventive method is capable of accepting modifications without departing from the scope of the invention.

While this invention has been particularly shown and described with reference to a preferred embodiment, it will be understood by those skilled in the art that various changes in form and details may be made therein without departing from the scope of the invention as described hereinabove.

**Itemized list of embodiments**

1. In a code division multiple access (CDMA) system that receives a plurality of data signals distinguished by codes, a method comprising:

   (a) constructing a system response matrix using all possible codes and channel responses associated with their codes;
   (b) based on the constructed matrix, performing N soft symbol estimates for the first N symbols of each of the possible codes;
   (c) based on the N soft symbol estimates for the first N symbols of each of the possible codes, determining received codes; and
   (d) extracting data from the matrix associated with the received codes.

2. The method of item 1 wherein the step of extracting data is performed using a multi-user detector (MUD).

3. The method of item 2 further comprising:

   (e) passing the N soft symbol estimates to the wherein the MUD does not repeat the computation of N soft symbols of each received code.

4. The method of item 1 further comprising:

   (f) marking codes in the constructed matrix that have not been received by the system as being invalid; and
   (g) marking codes in the constructed matrix that have been received by the system as being valid, wherein the invalid codes are not used for performing the processing of the data.

5. The method of item 1 wherein the N soft symbol estimates are used for code energy measurement in blind code detection.

6. The method of item 1 wherein the N soft symbol estimates are used for performing an end-of-DTX detection code energy measurement.

7. The method of item 1 wherein the N soft symbol estimates are based on whitening matched filter (WMF) outputs.

8. In a wireless transmit/receive unit (WTRU) that receives a plurality of data signals distinguished by codes, a method comprising:

   (a) constructing a system response matrix using all possible codes and channel responses associated with their codes;
   (b) based on the constructed matrix, performing N soft symbol estimates for the first N symbols of each of the possible codes;
   (c) based on the N soft symbol estimates for the first N symbols of each of the possible codes, determining received codes; and
   (d) extracting data from the matrix associated with the received codes,

9. The method of item 8 wherein the step of extracting data is performed using a multi-user detector (MUD).

10. The method of item 9 further comprising:

   (e) passing the N soft symbol estimates to the, wherein the MUD does not repeat the computation of N soft symbols of each received code.

11. The method of item 8 further comprising:

(f) marking codes in the constructed matrix that have not been received by the WTRU as being invalid; and
(g) marking codes in the constructed matrix that have been received by the WTRU as being valid, wherein the invalid codes are not used for performing the processing of the data.

12. The method of item 8 wherein the N soft symbol estimates are used for code energy measurement in blind code detection.

13. The method of item 8 wherein the N soft symbol estimates are used for performing an end-of-DTX detection code energy measurement.

14. The method of item 8 wherein the N soft symbol estimates are based on whitening matched filter (WMF) outputs.

15. A wireless transmit/receive unit (WTRU) that receives a plurality of data signals distinguished by codes, the WTRU comprising:

(a) means for constructing a system response matrix using all possible codes and channel responses associated with their codes;
(b) means for performing N soft symbol estimates for the first N symbols of each of the possible codes based on the constructed matrix;
(c) means for determining received codes based on the N soft symbol estimates for the first N symbol of each of the possible codes; and
(d) means for extracting data from the matrix associated with the received codes.

16. The WTRU of item 15 wherein the means for extracting data is a multi-user detector (MUD).

17. The WTRU of item 16 further comprising:

(e) means for passing the N soft symbol estimates to the MUD,
wherein the MUD does not repeat the computation of N soft symbols of each received code.

18. The WTRU of item 15 further comprising:

(f) means for marking codes in the constructed matrix that have not been received by the WTRU as being invalid; and
(g) means for marking codes in the constructed matrix that have been received by the WTRU as being valid, wherein the invalid codes are not used for performing the processing of the data.

19. The WTRU of item 15 wherein the N soft symbol estimates are used for code energy measurement in blind code detection.

20. The WTRU of item 15 wherein the N soft symbol estimates are used for performing an end-of-DTX detection code energy measurement.

21. The WTRU of item 15 wherein the N soft symbol estimates are based on whitening matched filter (WMF) outputs.

22. A wireless transmit/receive unit (WTRU) that receives a plurality of data signals distinguished by codes, the WTRU comprising:

(a) a device for constructing a system response matrix using all possible codes and channel responses associated with their codes;
(b) a whitening match filter (WMF) for performing N soft symbol estimates for the first N symbols of each of the possible codes based on the constructed matrix, wherein received codes are based on the N soft symbol estimates for the first N symbols of each of the possible codes; and
(c) a multi-user detector (MUD) for extracting data from the matrix associated with the received codes, wherein the WMF passes the N soft symbol estimates to the MUD, and wherein the MUD does not repeat the computation of N soft symbols of each received code.

23. The WTRU of item 22 wherein codes in the constructed matrix that have not been received by the WTRU are marked as being invalid and are not used for performing the processing of the data, and codes in the constructed matrix that have been received by the WTRU are marked as being valid.

24. An integrated circuit (IC) that receives a plurality of data signals distinguished by codes, the IC comprising:

(a) means for constructing a system response matrix using all possible codes and channel responses associated with their codes;
(b) means for performing N soft symbol estimates for the first N symbols of each of the possible codes based on the constructed matrix;
(c) means for determining received codes based on the N soft symbol estimates for the first N symbols of each of the possible codes; and
(d) means for extracting data from the matrix associated with the received codes.

25. The IC of item 24 wherein the means for extracting data is a multi-user detector (MUD).

26. The IC of item 25 further comprising:

(e) means for passing the N soft symbol estimates to the MUD,
wherein the MUD does not repeat the computation of N soft symbols of each received code.

27. The IC of item 24 further comprising:

(f) means for marking codes in the constructed matrix that have not been received by the IC as being invalid; and
(g) means for marking codes in the constructed matrix that have been received by the IC as being valid, wherein the invalid codes are not used for performing the processing of the data.

28. The 10 of item 24 wherein the N soft symbol estimates are used for code energy measurement in blind code detection.

29. The IC of item 24 wherein the N soft symbol estimates are used for performing an end-of-DTX detection code energy measurement.

30. The IC of item 24 wherein the N soft symbol estimates are based on whitening matched filter (WMF) outputs.

31. An integrated circuit (IC) that receives a plurality of data signals distinguished by codes, the IC comprising:

(a) a device for constructing a system response matrix using all possible codes and channel responses associated with their codes;
(b) a whitening match filter (WMF) for performing N soft symbol estimates for the first N symbols of each of the possible codes based on the constructed matrix, wherein received codes are based on the N soft symbol estimates for the first N symbols of each of the possible codes; and
(c) a multi-user detector (MUD) for extracting data from the matrix associated with the received codes, wherein the WMF passes the N soft symbol estimates to the MUD, and wherein the MUD does not repeat the computation of N soft symbols of each received code.

32. The IC of item 31 wherein codes in the constructed matrix that have not been received by the IC are marked as being invalid and are not used for performing the processing of the data, and codes in the constructed matrix that have been received by the IC are marked as being valid.

**Claims**

1. A wireless transmit/receive unit (WTRU) that receives a plurality of data signals distinguished by codes, the WTRU comprising:

(a) a device for constructing a system response matrix using all possible codes and channel responses associated with their codes;

(b) a whitening match filter (WMF) for performing a plurality of soft symbol estimates for symbols of each of the possible codes based on the constructed matrix; and

(c) a multi-user detector (MUD) for extracting data from the matrix associated with the received codes, wherein the WMF passes the soft symbol estimates to the MUD, the MUD does not repeat the computation of soft symbols of each received code, codes in the constructed matrix that have not been received by the WTRU are marked as being invalid, and codes in the constructed matrix that have been received by the WTRU are marked as being valid.

2. The WTRU of claim 1 wherein the soft symbol estimates are used to perform a blind code detection (BCD) code energy measurement.

3. In a wireless transmit/receive unit (WTRU) that receives a plurality of data signals distinguished by codes, a method comprising:

(a) constructing a system response matrix using all possible codes and channel responses associated with their codes;

(b) based on the constructed matrix, performing a plurality of soft symbol estimates for symbols of each of the possible codes;

(c) determining received codes based on the soft symbol estimates;

(d) extracting data from the matrix associated with the received codes;

(e) marking codes in the constructed matrix that have not been received as being invalid; and

(f) marking codes in the constructed matrix that have been received as being valid, wherein the invalid codes are not used to extract data from the matrix.

4. The method of claim 3 wherein step (d) is performed using a multi-user detector (MUD).

5. The method of claim 4 further comprising:

(g) passing the soft symbol estimates to the MUD, wherein the MUD does not repeat the computation of soft symbols of each received code.

6. The method of claim 3 wherein the soft symbol estimates are used to perform a discontinuous transmission (DTX) detection code energy measurement.

7. The method of claim 3 wherein the soft symbol estimates are based on whitening matched filter (WMF) outputs.

8. The method of claim 3 wherein the soft symbol estimates are used to perform a blind code detection (BCD) code energy measurement.

9. A wireless transmit/receive unit (WTRU) that receives a plurality of data signals distinguished by codes, the WTRU comprising:

(a) a device for constructing a system response matrix using all possible codes and channel responses associated with their codes; and

(b) a whitening match filter (WMF) for performing soft symbol estimates for symbols of each of the possible codes based on the constructed matrix, wherein codes in the constructed matrix that have not been received are marked as being invalid, and codes in the constructed matrix that have been received are marked as being valid.

10. The WTRU of claim 9 wherein the soft symbol estimates are used to perform a blind code detection (BCD) code energy measurement.

11. An integrated circuit (IC) that receives a plurality of data signals distinguished by codes, the IC comprising:

(a) a device for constructing a system response matrix using all possible codes and channel responses associated with their codes; and

(b) a whitening match filter (WMF) for performing soft symbol estimates for symbols of each of the possible codes based on the constructed matrix, wherein codes in the constructed matrix that have not been received are marked as being invalid, and codes in the constructed matrix that have been received are marked as being valid.

12. The IC of claim 11 wherein the soft symbol estimates are used to perform a blind code detection (BCD) code energy measurement.

FIG. 1

SYMBOL #0 $\{$

| $A^H r_{0\,0}$ |
|---|
| $A^H r_{0\,1}$ |
| $A^H r_{0\,2}$ |
| $A^H r_{0\,3}$ |

| $A^H r_{0\,M\text{-}1}$ |
|---|
| $A^H r_{1\,0}$ |
| $A^H r_{1\,1}$ |
| $A^H r_{1\,2}$ |
| $A^H r_{1\,3}$ |

SYMBOL #1 $\{$

150

WHITENING MATCHED FILTER
RESULTS USING OVERBUILT
A-MATRIX

| $A^H r_{1\,M\text{-}1}$ |
|---|
| $A^H r_{2\,0}$ |
| $A^H r_{2\,1}$ |
| $A^H r_{2\,2}$ |
| $A^H r_{2\,3}$ |

SYMBOL #2 $\{$

| $A^H r_{2\,M\text{-}1}$ |
|---|

| $A^H r_{N\text{-}1\,0}$ |
|---|
| $A^H r_{N\text{-}1\,1}$ |
| $A^H r_{N\text{-}1\,2}$ |
| $A^H r_{N\text{-}1\,3}$ |

SYMBOL #(N-1) $\{$

| $A^H r_{N\text{-}1\,M\text{-}1}$ |
|---|

FIG. 2

| | |
|---|---|
| $A^H r_{0\,0}$ | * |
| $A^H r_{0\,1}$ | |
| $A^H r_{0\,2}$ | * |
| $A^H r_{0\,3}$ | * |

SYMBOL #0

| | |
|---|---|
| $A^H r_{0\,M\text{-}1}$ | |
| $A^H r_{1\,0}$ | * |
| $A^H r_{1\,1}$ | |
| $A^H r_{1\,2}$ | * |
| $A^H r_{1\,3}$ | * |

SYMBOL #1

**150**

PREVIOUS WHITENING
MATCHED FILTER
RESULTS USING
OVERBUILT A-MATRIX
(INVALIDATED VALUES
MARKED WITH '*')

| | |
|---|---|
| $A^H r_{1\,M\text{-}1}$ | |
| $A^H r_{2\,0}$ | * |
| $A^H r_{2\,1}$ | |
| $A^H r_{2\,2}$ | * |
| $A^H r_{2\,3}$ | * |

SYMBOL #2

| | |
|---|---|
| $A^H r_{2\,M\text{-}1}$ | |

| | |
|---|---|
| $A^H r_{N\text{-}1\,0}$ | * |
| $A^H r_{N\text{-}1\,1}$ | |
| $A^H r_{N\text{-}1\,2}$ | * |
| $A^H r_{N\text{-}1\,3}$ | * |

SYMBOL #(N-1)

| | |
|---|---|
| $A^H r_{N\text{-}1\,M\text{-}1}$ | |
| $A^H r_{N\,0}$ | |
| $A^H r_{N\,1}$ | X |
| $A^H r_{N\,2}$ | |
| $A^H r_{N\,3}$ | |

SYMBOL #N

**115**

WHITENING MATCHED
FILTER RESULTS
FOR REMAINING
SYMBOLS (CALCULATED
VALUES MARKED WITH 'X')

| | |
|---|---|
| $A^H r_{N\,M\text{-}1}$ | X |

| | |
|---|---|
| $A^H r_{Ntotal\text{-}1\,0}$ | |
| $A^H r_{Ntotal\text{-}1\,1}$ | X |
| $A^H r_{Ntotal\text{-}1\,2}$ | |
| $A^H r_{Ntotal\text{-}1\,3}$ | |

SYMBOL #(Ntotal-1)

| | |
|---|---|
| $A^H r_{Ntotal\text{-}1\,M\text{-}1}$ | X |

FIG. 3

<u>400</u>

START

CHANNEL ESTIMATION DEVICE RUNS MIDAMBLE DETECTION ALGORITHM AND PASSES RESULTS TO BLIND CODE DETECTION DEVICE AND END-OF-DTX DEVICE — 405

CANDIDATE CODE LIST DEVICE IN BLIND CODE DETECTION DEVICE PROVIDES AN INITIAL LIST OF CODES TO A-MATRIX CONSTRUCTION DEVICE — 410

CONSTRUCT OVERBUILT A-MATRIX USING CODES PASSED BY CANDIDATE CODE LIST DEVICE — 415

WMF USES OVERBUILT A-MATRIX TO OUTPUT N SOFT SYMBOLS ASSOCIATED WITH EACH CODE — 420

PERFORM MEASUREMENTS ON N SOFT SYMBOLS TO DETERMINE WHICH CODES ARE PRESENT — 425

PASS INFORMATION ABOUT CODES THAT ARE PRESENT, SOFT SYMBOLS, AND A-MATRIX TO MUD — 430

END

FIG. 4

European Patent Office

**EUROPEAN SEARCH REPORT**

Application Number

EP 07 11 1464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/110099 A1 (ZEIRA ARIELA ET AL) 15 August 2002 (2002-08-15) * abstract; figures 3,5,6 * * paragraphs [0002], [0007], [0008], [0017] - [0020] * | 1-12 | INV. H04B7/216 H04B1/707 |
| X | KANG SHAO-LI; QIU ZHENG-DING; XIAO YANG; LI SHI-HE: "Performance of active codes detection algorithms for the downlink of TD-SCDMA system" 002 IEEE INTERNATIONAL SYMPOSIUM ON CIRCUITS AND SYSTEMS. PROCEEDINGS, [Online] vol. 1, 26 May 2002 (2002-05-26), - 29 May 2002 (2002-05-29) pages I-613-I-616, XP002444589 Piscataway, NJ, USA ISBN: 0-7803-7448-7 Retrieved from the Internet: URL:http://ieeexplore.ieee.org/iel5/7897/2 1766/01009915.pdf?tp=&arnumber=1009915&isn umber=21766> [retrieved on 2007-07-27] * paragraph [1.INTRODUCTION]; figure 1 * * paragraphs [3.ACTIVE], [CODES], [DETECTION], [ALGORITHMS] * * paragraphs [03.1], [DATA], [POWER], [JUDGEMENT] * | 1-12 | |

-/--

TECHNICAL FIELDS SEARCHED (IPC)

H04B

The present search report has been drawn up for all claims

| Place of search | Date of completion of the search | Examiner |
|---|---|---|
| Munich | 27 July 2007 | Bauer, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 11 1464

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOURTIS S ; MCANDREW P ; TOTTLE P: "Technology requirements of the 3GPP-TDD terminal" 1ST INTERNATIONAL CONFERENCE ON '3G MOBILE COMMUNICATION TECHNOLOGIES'; LONDON, UK, [Online] 27 March 2000 (2000-03-27), - 29 March 2000 (2000-03-29) pages 89-93, XP002444590 London ISSN: 0537-9989 Retrieved from the Internet: URL:http://ieeexplore.ieee.org/iel5/6929/18626/00858209.pdf?tp=&isnumber=&arnumber=858209> [retrieved on 2007-07-27] * figure 3 * * paragraphs [JOINT], [DETECTION] * ----- | 1-12 | |
| | | | **TECHNICAL FIELDS SEARCHED (IPC)** |

The present search report has been drawn up for all claims

| Place of search | Date of completion of the search | Examiner |
|---|---|---|
| Munich | 27 July 2007 | Bauer, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 1464

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2007

| Patent document cited in search report | Publication date | Patent family member(s) | Publication date |
|---|---|---|---|
| US 2002110099 A1 | 15-08-2002 | US 2002097698 A1<br>US 2001024426 A1 | 25-07-2002<br>27-09-2001 |

EPO FORM P0459

For more details about this annex : see Official Journal of the European Patent Office, No. 12/82

**EP 1 833 177 A1**

## REFERENCES CITED IN THE DESCRIPTION

### Patent documents cited in the description

• US 39699203 A